# FASCICULE DE BREVET EUROPEEN

(11) **EP 3 071 054 B1**
(45) Date de publication et mention de la délivrance du brevet: **30.06.2021**
(21) Numéro de dépôt: 14814930.5
(22) Date de dépôt: 19.11.2014
(51) Int. Cl.: A23L 33/17, A23J 1/14, A23L 5/00

(54) **NOUVEAUX SNACKS NON ALLERGENES CONTENANT DES PROTEINES VEGETALES**
NEUARTIGE NICHTALLERGENE SNACKPRODUKTE MIT PFLANZLICHEN PROTEINEN
NOVEL NON-ALLERGENIC SNACKS CONTAINING VEGETABLE PROTEINS

(30) Priorité: 19.11.2013 FR 1361360
(43) Date de publication de la demande: 28.09.2016
(73) Titulaire: Roquette Frères, 62136 Lestrem (FR)
(72) Inventeur: LIS, José, F-59253 La Gorgue (FR); MARQUILLY, Philippe, F-59320 Ennetieres en Weppes (FR); LAGACHE, Sylvie, F-59700 Marcq en Baroeul (FR); RETOURNE, Laëtitia, F-62350 Mont Bernanchon (FR)
(74) Mandataire: Plasseraud IP
(86) Numéro de dépôt international: PCT/FR2014/052963
(87) Numéro de publication internationale: WO 2015/075378

(56) Documents cités:
- WO-A1-2010/071541
- JP-A- 2009 247 270
- US-A1- 2009 226 542
- US-A1- 2011 144 006
- DATABASE MEDLINE [Online] US NATIONAL LIBRARY OF MEDICINE (NLM), BETHESDA, MD, US; février 1987 (1987-02), MACHIDA Y ET AL: "Use of soybean protein for controlled release of drugs administered orally.", XP002728861, Database accession no. NLM3509331
- None

## Description

### DOMAINE DE L'INVENTION

La présente invention concerne de nouveaux produits alimentaires, et plus particulièrement de nouveaux produits destinés à être consommés sous la forme de snacks, ayant la particularité d'être non gras, non allergènes et présentant une texture très similaire aux fruits secs tels que la cacahuète. Plus précisément, la présente invention concerne des nouveaux snacks non allergènes, et formulés à partir de protéines essentiellement voire exclusivement végétales, de préférence de protéines de légumineuse et plus préférentiellement de protéines de pois.

### ARRIERE-PLAN TECHNOLOGIQUE

La tradition de l'apéritif remonterait au moyen-âge. Les premiers apéritifs avaient une fonction médicinale. Le but était d'ouvrir l'appétit avant de se mettre à table, comme en témoigne l'origine latine du mot « aperire » qui signifie ouvrir.

Au Moyen-âge, pour ouvrir l'appétit et favoriser la digestion, on consommait un vin cuit aromatisé aux herbes auquel on prêtait des vertus apéritives. L'apéritif est un moment privilégié que les français sont 90% à pratiquer. Aujourd'hui, en France, nous prenons l'apéritif au moins une fois par semaine. Il est alors le prélude à un repas entre amis ou bien alors à un apéritif dinatoire façon dîner-dinette, une variante de l'apéritif de plus en plus prisée.

De nos jours, l'apéritif désigne un moment informel, improvisé. Le mot lui-même ne fait plus seulement référence à une boisson alcoolisée : il signifie aussi un moment de partage. L'apéritif traditionnel se pare le plus souvent de la panoplie du grignotage : biscuits salés, fruits secs, cacahuètes, olives... Depuis quelques années, il se « culinarise ». Véritable révélateur des mutations sociales, le rituel évolue sans cesse en fonction des nouveaux modes de vie. Par contre, le moment de l'apéritif est souvent synonyme de grignotage.

Or les tendances actuelles sont plutôt tournées vers la consommation de produits ne contenant pas ou peu de matières grasses. En effet, certaines personnes soucieuses de leur ligne et de leur santé veulent consommer des produits réduits en matière grasse, en cholestérol et dont la charge calorique est réduite.

Les chips et autres dérivés ne font plus l'unanimité. Les chips sont riches en lipides saturés, bien connus pour leur effet négatif sur le taux de cholestérol. D'après une étude publiée dans le New England Journal of Medicine (N Engl J Med 2011; 365:1058-1059, September 15, 2011), les chips seraient dorénavant la cause première de l'obésité aux États-Unis. Les résultats de l'étude démontrent que les chips ne contribueraient pas seulement à l'obésité et aux épidémies de maladies cardiaques. La consommation de chips augmenterait, outre le risque d'obésité, le risque d'hypertension, de diabète de type 2 et de maladies coronariennes. Les enfants, premiers consommateurs de chips, ingurgiteraient sans le savoir, 5 litres d'huile par an, mais aussi un excès de sel et de sucre contenu dans l'amidon des pommes de terre.

D'autre part, certains fruits secs sont connus pour être allergènes et leur consommation peut donc présenter des risques car elles peuvent entraîner des réactions très gênantes, voire même dangereuses au quotidien. Les réactions allergiques sont des effets indésirables graves qui surviennent lorsque le système immunitaire présente une réaction exagérée à un allergène donné. Les symptômes surviennent habituellement rapidement après la consommation (avant 2 heures). Les personnes allergiques présentent un ou plusieurs des symptômes suivants : démangeaisons, éruption cutanée, gonflement du visage, des yeux, des lèvres, chaleur du visage, picotements dans la bouche, mal à la gorge, peine à avaler ou parler, éternuements, rhume, peine à respirer, sifflements, crise d'asthme, mal au ventre, vomissement, diarrhée, agitation, angoisse ou repli sur soi avec irritabilité, faiblesse, malaise, vertige, perte de connaissance, accélération du rythme du cœur, chute de la tension artérielle.

Ainsi, les personnes souffrant d'allergies alimentaires aux cacahuètes/arachides sont à la recherche de produits totalement dépourvus de ces allergènes.

Enfin, les végétariens et végétaliens refusent également de consommer tous produits issus d'animaux et boycottent par conséquent tous les produits alimentaires en contenant.

Dans l'art antérieur, il n'existe pas de produit répondant à ces problématiques. Il est néanmoins possible de citer le document WO 2010/071541 A1 décrivant une poudre adaptée pour être utilisée comme complément nutritionnel et possédant un profil en acides aminés bien particulier et pouvant également contenir d'autres éléments. Ladite poudre peut être obtenue d'une ou plusieurs sources différentes pouvant être soit végétale, soit animale soit les deux.

Ainsi, il existe un besoin non satisfait pour de nouveaux produits non allergènes, non caloriques, ne contenant pas de protéines animales mais essentiellement voire exclusivement des protéines végétales et qui puissent être consommés à tout moment de la journée et particulièrement au moment de l'apéritif.

### RESUME DE L'INVENTION

Après de nombreux travaux de recherche, la société Demanderesse a eu le mérite de trouver qu'un tel besoin pouvait être satisfait par de nouveaux produits, et plus particulièrement de nouveaux snacks, obtenus par compression de protéines végétales particulières. Ces produits ayant la particularité d'être non gras, et non allergènes présentent en outre une texture très similaire aux fruits secs tels que la cacahuète lors de leur consommation et donc très appréciée.

La présente invention concerne donc un produit alimentaire caractérisé en ce qu'il est obtenu par compression, de préférence directe, d'une composition pulvérulente comprenant une protéine ou un mélange de protéines essentiellement voire exclusivement végétales, le produit alimentaire étant aromatisé grâce à l'ajout d'au moins un arôme, l'arôme étant choisi parmi les arômes de fruits secs.
Selon un mode de réalisation particulier, le produit alimentaire de l'invention est aromatisé par un arôme choisi parmi l'arôme noisette, cacahuète, noix de cajou, noix de pécan, pistaches.

Plus particulièrement, ledit produit alimentaire est caractérisé en ce que la ou les protéines végétales appartiennent aux protéines issues des céréales, des oléagineux, des légumineuses et des tubercules, ainsi que toutes les protéines issues des algues et des microalgues.

Selon un mode préféré de l'invention, ledit produit alimentaire est caractérisé en ce que la ou les protéines végétales appartiennent aux protéines de légumineuses, la protéine de légumineuse étant de préférence choisie dans le groupe consistant en la protéine de la luzerne, du trèfle, du lupin, du pois, du haricot, de la fève, de la fèverole, de la lentille, et de leurs mélanges. De préférence, la protéine végétale est une protéine de pois.

Selon un premier mode de réalisation de l'invention, le produit alimentaire est caractérisé en ce qu'il contient au moins 15%, de préférence au moins 20% d'une composition de protéines végétales, ces pourcentages étant exprimés par rapport à la masse totale des ingrédients mis en œuvre dans la recette de préparation dudit produit.

Selon un autre mode de réalisation de l'invention, le produit alimentaire est caractérisé en ce qu'il contient au moins 50%, de préférence au moins 60%, encore plus préférentiellement au moins 70% d'une composition de protéines végétales, ces pourcentages étant exprimés par rapport à la masse totale des ingrédients mis en œuvre dans la recette de préparation dudit produit.

Selon un mode préféré, le produit alimentaire contient au moins 75% d'une composition de protéines végétales, ces pourcentages étant exprimés de la masse totale des ingrédients mis en œuvre dans la recette de préparation dudit produit.

Selon l'invention, le produit alimentaire contient également de 15% à 50% d'une fibre végétale soluble, pourcentage exprimé par rapport à la masse totale des ingrédients mis en œuvre dans la recette de préparation dudit produit. De préférence, la fibre végétale soluble est choisie parmi les fructanes dont les Fructo-oligosaccharides (FOS) et l'inuline, les Gluco-oligosaccharides (GOS), les Isomalto-oligosaccharides (IMOs), les Trans-galacto-oligosaccharide (TOS), les pyrodextrines, le polydextrose, les maltodextrines branchées, les dextrines indigestibles et les oligosaccharides solubles issus de plantes oléagineuses ou protéagineuses ou leurs mélanges.

Selon un mode de réalisation particulièrement intéressant, la fibre végétale soluble est une maltodextrine branchée.

Par ailleurs, le produit alimentaire contient de 15% à 50% d'une farine de microalgue, pourcentage exprimé par rapport à la masse totale des ingrédients mis e œuvre dans la recette de préparation dudit produit. Plus particulièrement, la farine de microalgues est une farine de microalgues du genre Chlorella, et plus particulièrement encore de l'espèce *Chlorella protothecoides.*

Selon un autre mode de réalisation, le produit alimentaire contient de 1% à 15% d'au moins un polyol, et de préférence du sorbitol.

En outre, ledit produit alimentaire contient entre 1% et 10%, et de préférence entre 2% et 6% d'arômes, ces pourcentages étant exprimés par rapport à la masse totale des ingrédients mis en œuvre dans la recette de préparation dudit produit.

Le produit alimentaire peut également avoir subi un traitement final choisi parmi la dragéification dure et le pelliculage.

Enfin, la présente invention concerne également un procédé de préparation dudit produit alimentaire caractérisé en ce qu'il comprend les étapes suivantes :
- de préparation d'une composition pulvérulente comprenant une protéine végétale ou un mélange de protéines végétales, en mélange avec au moins un arôme, l'arôme étant choisi parmi les arômes de fruits secs ;
- de remplissage de la matrice d'une presse avec le dit mélange ;
- de l'action de compression directe du mélange à l'aide d'un poinçon (charge)
- du retrait du poinçon qui réalise la compression (décharge),
- l'éjection du comprimé
- et optionnellement la soumission du dit comprimé à un procédé de dragéification dure ou pelliculage.

Selon un mode avantageux, l'invention concerne également l'utilisation du produit alimentaire comme substitut de fruit sec allergène.

### DESCRIPTION DETAILLEE DES MODES DE REALISATION

Ainsi la présente invention concerne de nouveaux produits destinés à être consommés, de préférence sous la forme de snacks, ayant la particularité d'être non gras, non allergènes et présentant une texture et un goût très similaires aux fruits secs tels que la cacahuète.

Plus précisément, la présente invention concerne des nouveaux produits et plus particulièrement de nouveaux snacks non allergènes, non caloriques, et formulés à partir des compositions pulvérulentes de protéines essentiellement voire exclusivement végétales.

Plus précisément, l'invention concerne un produit alimentaire caractérisé en ce qu'il est obtenu par compression d'une composition pulvérulente comprenant une protéine végétale ou un mélange de protéines végétales, le produit alimentaire étant aromatisé grâce à l'ajout d'au moins un arôme, l'arôme étant choisi parmi les arômes de fruits secs.

C'est la combinaison entre l'utilisation d'une composition de protéines végétales bien particulières et d'un procédé de compression qui permet au produit obtenu d'avoir une texture similaire à celle d'un fruit sec lors de sa consommation, tout en s'affranchissant des désavantages tels que la charge calorique et l'allergénicité. Dans la présente invention, le terme « snacks » désigne tous les produits ou compositions destinés à être consommés à n'importe quel moment de la journée, et censés procurer du plaisir lors de leur consommation. Il s'agit donc de produits que les consommateurs vont plutôt consommer au moment du goûter, de l'apéritif ainsi que les produits que l'on consomme lors de petits instants dits de grignotage.

Dans la présente invention, le terme « protéine végétale » désigne toutes les protéines issues des céréales, des oléagineux, des légumineuses et des tubercules, ainsi que toutes les protéines issues des algues et des microalgues, utilisée seule ou en mélange, choisie dans la même famille ou dans des familles différentes.

Ces protéines végétales utilisées en mélange peuvent être choisies dans la même famille ou dans des familles différentes.

Par « algues » et « microalgues », on entend dans la présente demande des organismes eucaryotes dépourvus de racine, de tige et de feuille, mais possédant de la chlorophylle ainsi que d'autres pigments accessoires à la photosynthèse productrice d'oxygène. Elles sont bleues, rouges, jaunes, dorées et brunes ou encore vertes.

Les microalgues au sens strict sont des algues microscopiques. Unicellulaires ou pluricellulaires indifférenciées, ce sont des micro-organismes photosynthétiques séparés en deux groupes polyphylétiques : les eucaryotes et les procaryotes. Vivant dans les milieux fortement aqueux, elles peuvent posséder une mobilité flagellaire.

Selon un mode préférentiel, les microalgues sont choisies parmi le groupe constitué par Chlorella, Spirulina et Odontella.

Selon un mode encore plus préférentiel, les microalgues de la présente invention sont issues du genre Chlorella, et de préférence de *Chlorella vulgaris, Chlorella pyrenoidosa, Chlorella regularis*, *Chlorella sorokiniana*, et de façon encore plus préférentielle de *Chlorella vulgaris*.

Par « céréales », on entend dans la présente demande des plantes cultivées de la famille des graminées produisant des grains comestibles, comme par exemple le blé, l'avoine, le seigle, l'orge, le maïs, le sorgho, le riz. Les céréales sont souvent moulues sous forme de farine, mais se présentent aussi sous forme de grains et parfois sous forme de plante entière (fourrages).

Par « tubercules », on entend dans la présente demande tous les organes de réserve, généralement souterrains, qui assurent la survie des plantes pendant la saison d'hiver et souvent leur multiplication par voie végétative. Ces organes sont renflés par l'accumulation de substances de réserve. Les organes transformés en tubercules peuvent être :
- la racine : carotte, panais, manioc, konjac,
- le rhizome : pomme de terre, topinambour, crosne du Japon, patate douce,
- la base de la tige (plus précisément l'hypocotyle) : chou-rave, cèleri-rave,
- l'ensemble racine et hypocotyle : betterave, radis.

Par « oléagineux », on désigne dans la présente demande les plantes cultivées spécifiquement pour leurs graines ou leurs fruits riches en matières grasses, dont on extrait de l'huile à usage alimentaire, énergétique ou industriel, comme par exemple le colza, l'arachide, le tournesol, le soja, le sésame, le ricin.

Par « légumineuses », on entend, au sens de la présente invention, toutes plantes appartenant aux familles des césalpiniacées, des mimosacées ou des papilionacées et notamment toutes plantes appartenant à la famille des papilionacées comme, par exemple, le pois, le haricot, la fève, la fèverole, la lentille, la luzerne, le trèfle ou le lupin. Cette définition inclut notamment toutes les plantes décrites dans l'un quelconque des tableaux contenus dans l'article de R. HOOVER et al., 1991 (HOOVER R. (1991) « Composition, structure, functionality and chemical modification of legume starches : a review » Can. J. Physiol. Pharmacol., 69 pp. 79-92).

Selon un mode préférentiel de la présente invention, la protéine végétale appartient aux protéines de légumineuses.

En outre, selon un mode préférentiel, la protéine de légumineuse est choisie dans le groupe consistant en la protéine de la luzerne, du trèfle, du lupin, du pois, du haricot, de la fève, de la fèverole, de la lentille, et de leurs mélanges.

De manière plus préférée, ladite protéine de légumineuse est choisie dans le groupe consistant en la protéine du pois, du haricot, de la fève, de la fèverole, et de leurs mélanges.

De manière encore plus préférée, ladite protéine de légumineuse est issue du pois.

Le terme « pois » étant ici considéré dans son acception la plus large et incluant en particulier :
- toutes les variétés de « pois lisse » (« *smooth pea* ») et « de pois ridés » (« *wrinkied pea* »), et
- toutes les variétés mutantes de « pois lisse » et de « pois ridé » et ce, quelles que soient les utilisations auxquelles on destine généralement lesdites variétés (alimentation humaine, nutrition animale et/ou autres utilisations).

Le terme « pois » dans la présente demande inclut les variétés de pois appartenant au genre *Pisum* et plus particulièrement aux espèces *sativum* et *aestivum.*

Lesdites variétés mutantes sont notamment celles dénommées « mutants r », « mutants rb », « mutants rug 3 », « mutants rug 4 », « mutants rug 5 » et « mutants lam » tels que décrits dans l'article de C-L HEYDLEY et al. intitulé « Developing novel pea starches », Proceedings of the Symposium of the Industrial Biochemistry and Biotechnology Group of the Biochemical Society, 1996, pp. 77-87.

De manière encore plus préférentielle, ladite protéine de légumineuse est issue du pois lisse.

Le pois est la légumineuse à graines riches en protéines qui, depuis les années 70, s'est le plus développée en Europe et principalement en France, non seulement comme source protéique pour l'alimentation animale, mais aussi pour l'alimentation humaine.

Les protéines de pois sont constituées, comme toutes les protéines de légumineuses, de trois classes de protéines principales : les globulines, les albumines et les protéines dites insolubles.

L'intérêt des protéines de pois réside dans leurs bonnes capacités émulsifiantes, leur absence d'allergénicité, et leur faible coût, ce qui en fait un ingrédient fonctionnel économique.

De plus, les protéines de pois participent favorablement au développement durable et leur impact carbone est très positif. En effet, la culture du pois est respectueuse de l'environnement, et ne nécessite pas d'engrais azotés, car le pois fixe l'azote de l'air.

Selon la présente invention, la composition pulvérulente comprenant au moins une protéine végétale est de préférence une composition comprenant au moins une protéine de pois.

Selon un autre mode de réalisation de l'invention, la composition pulvérulente ou sous le forme de poudre comprenant au moins une protéine végétale est un mélange entre une protéine de pois et une autre protéine végétale issue des céréales, des oléagineux, des légumineuses et des tubercules, ainsi que toutes les protéines issues des algues et des microalgues.

La composition pulvérulente comprenant au moins une protéine végétale, en particulier une protéine de pois, utilisée selon l'invention peut présenter avantageusement une teneur en protéines totales (N x 6,25), d'au moins 60 % en poids de produit sec. De préférence, on utilise dans le cadre de la présente invention une composition ayant une teneur en protéines élevée, comprise entre 70 % et 97 % en poids de produit sec, de préférence entre 76 % et 95 %, plus préférentiellement encore comprise entre 78 % et 88 %, et en particulier comprise entre 78 % en 85 %. La teneur en protéines totales est mesurée en effectuant le dosage de la fraction azotée soluble contenue dans l'échantillon selon la méthode de Kjeldahl. Puis, le taux de protéines totales est obtenu en multipliant le taux d'azote exprimé en pourcentage de poids de produit sec par le facteur 6,25.

En outre, ladite composition comprenant au moins une protéine végétale, en particulier une protéine de pois, peut présenter une teneur en protéines solubles, exprimée selon un test décrit ci-après de mesure de la solubilité dans l'eau des protéines, comprise entre 20 % et 99 %. De préférence, on utilise dans le cadre de la présente invention une composition ayant un taux élevé de protéines solubles compris entre 45 % et 90 %, plus préférentiellement encore entre 50 % et 80 %, et en particulier entre 55 % et 75 %.

Pour déterminer le taux de protéines solubles, on mesure la teneur en protéines solubles dans l'eau dont le pH est ajusté à 7,5 +/- 0,1 à l'aide d'une solution de HCl ou NaOH, par une méthode de dispersion d'une prise d'essai de l'échantillon dans de l'eau distillée, centrifugation et analyse du surnageant. Dans un bêcher de 400 ml, on introduit 200,0 g d'eau distillée à 20°C +/- 2°C, et on place le tout sous agitation magnétique (barreau aimanté et rotation à 200 rpm). On ajoute exactement 5 g de l'échantillon à analyser. On agite pendant 30 min, et on centrifuge pendant 15 min à 4.000 rpm. On réalise, sur le surnageant la méthode de détermination de l'azote selon la méthode précédemment décrite (méthode de Kjeldahl).

Ces compositions comprenant au moins une protéine végétale, en particulier une protéine de pois, présentent de manière préférée plus de 50 %, plus préférentiellement plus de 60 %, encore plus préférentiellement plus de 70 %, encore plus préférentiellement plus de 80 %, et en particulier plus de 90 % de protéines de plus de 1 000 Da. La détermination du poids moléculaire de la protéine peut être réalisée selon la méthode décrite ci-après. En outre, ces compositions comprenant au moins une protéine végétale, en particulier une protéine de pois, présentent de manière préférée un profil de distribution des poids moléculaires constitué de :
- 1 % à 8 %, de préférence de 1,5 % à 4 %, et plus préférentiellement encore de 1,5 % à 3 %, de protéines de plus de 100 000 Da,
- 20 % à 55 %, de préférence de 25 % à 55 %, de protéines de plus de 15 000 Da et d'au plus 100 000 Da,
- 15 % à 30 % de protéines de plus de 5 000 Da et d'au plus 15 000 Da,
- et de 25 % à 55 %, de préférence de 25 % à 50 %, et plus préférentiellement encore de 25 % à 45 % de protéines d'au plus 5 000 Da.

Des exemples de compositions comprenant au moins une protéine végétale, en particulier une protéine de pois, selon l'invention, ainsi que le détail de la méthode de détermination des poids moléculaires peuvent être trouvés dans le brevet WO 2007/017572.

Selon la présente invention, la composition comprenant au moins une protéine végétale, en particulier une protéine de pois, peut être choisie dans le groupe constitué de concentrat de protéines végétales et d'isolat de protéines végétales, de préférence de concentrat de protéines de pois et d'isolat de protéines de pois. Les concentrats et les isolats de protéines végétales, et en particulier de pois, sont définis en regard de leur teneur en protéines (cf. la revue de J. GUEGUEN de 1983 dans Proceedings of European Congress on plant proteins for human food (3-4) pp 267 - 304):
- les concentrats de protéines végétales, et en particulier de pois, sont décrits comme présentant une teneur en protéines totales de 60 % à 75 % sur sec, et
- les isolats de protéines végétales, et en particulier de pois, sont décrits comme présentant une teneur en protéines totales de 90 % à 95 % sur sec,
la teneur en azote étant mesurée par la méthode de Kjeldhal et les teneurs en protéines étant obtenu en multipliant le taux d'azote exprimé en pourcentage de produit sec, par le facteur 6,25.

Dans un autre mode de réalisation de la présente invention, la composition comprenant au moins une protéine végétale, en particulier une protéine de pois, peut également être un « hydrolysat de protéines végétales », de préférence « hydrolysat de protéines de pois ». Les hydrolysats de protéines végétales, et en particulier de pois, sont définis comme des préparations obtenues par hydrolyse par voie enzymatique, par voie chimique, ou par les deux voies simultanément ou successivement, de protéines végétales, et en particulier de pois. Les hydrolysats de protéines comprennent une proportion plus élevée en peptides de différentes tailles et en acides aminés libres que la composition originale. Cette hydrolyse peut avoir un impact sur la solubilité des protéines. L'hydrolyse enzymatique et/ou chimique est par exemple décrite dans la demande de brevet WO 2008/001183. De préférence, l'hydrolyse de protéines n'est pas complète, c'est-à-dire ne résulte pas en une composition comprenant uniquement ou essentiellement des acides aminés et des petits peptides (de 2 à 4 acides aminés). Les hydrolysats préférés comprennent plus de 50 %, plus préférentiellement plus de 60 %, encore plus préférentiellement plus de 70 %, encore plus préférentiellement plus de 80 %, et en particulier plus de 90 % de protéines et de polypeptides de plus de 500 Da.

Les procédés de préparation d'hydrolysats de protéines sont bien connus de l'homme du métier et peuvent par exemple comprendre les étapes suivantes : dispersion des protéines dans l'eau pour obtenir une suspension, hydrolyse de cette suspension par le traitement choisi. Le plus souvent, il s'agira d'un traitement enzymatique combinant un mélange de différentes protéases, éventuellement suivi d'un traitement thermique destiné à inactiver les enzymes encore actives. La solution obtenue peut ensuite être filtrée sur une ou plusieurs membranes de façon à séparer les composés insolubles, éventuellement l'enzyme résiduelle et les peptides de haut poids moléculaire (supérieur à 10 000 daltons).

Selon un mode optionnel de réalisation de l'invention, les compositions comprenant au moins une protéine végétale, en particulier une protéine de pois, peuvent subir un traitement thermique à température élevée et pendant un temps court, ledit traitement pouvant être choisi parmi les traitements HTST (*High Temperature Short Time*) et UHT (*Ultra High Temperature*). Ce traitement permet avantageusement de réduire les risques bactériologiques.

Selon un premier mode de réalisation de l'invention, le produit alimentaire est caractérisé en ce qu'il contient au moins 15%, de préférence au moins 20% d'une composition de protéines végétales, ces pourcentages étant exprimés par rapport à la masse totale des ingrédients mis en œuvre dans la recette de préparation dudit produit.

Dans un autre mode de réalisation de l'invention, ledit produit est caractérisé en ce qu'il contient au moins 50% d'une composition de protéines végétales, pourcentage exprimé par rapport à la masse totale des ingrédients mis en œuvre dans la recette de préparation dudit produit.

Dans un autre mode de réalisation de l'invention, ledit produit est caractérisé en ce qu'il contient au moins 60% de protéines végétales, pourcentage exprimé par rapport à la masse totale des ingrédients mis en œuvre dans la recette de préparation dudit produit.

Dans un autre mode de réalisation de l'invention, ledit produit est caractérisé en ce qu'il contient au moins 70% de protéines végétales, pourcentage exprimé par rapport à la masse totale des ingrédients mis en œuvre dans la recette de préparation dudit produit.

Dans un mode préféré de l'invention, ledit produit est caractérisé en ce qu'il contient au moins 75% de protéines végétales, pourcentage exprimé par rapport à la masse totale des ingrédients mis en œuvre dans la recette de préparation dudit produit.

Le fait que le produit selon l'invention contienne un fort pourcentage de protéines en fait un complément nutritionnel très intéressant pour tout le monde.

Du fait de sa forme très pratique à emmener partout et à consommer en toutes circonstances en fait un allié important pour les personnes en mouvement permanent type nomades ou pour celles et ceux qui veulent contrôler leur prise de protéines (sportifs par exemple).

De plus, sa consommation par des populations carencées en protéines, telles les séniors par exemple, peut pallier en partie à cette carence protéique et permettre un apport en protéines donc en acides aminés non négligeables pour la santé et le bien-être de façon générale.

Le fait également d'associer dans certains modes de réalisation particuliers un fort pourcentage de protéines à d'autres éléments tels des fibres et/ou d'autres sources de protéines permet également d'augmenter encore l'aspect nutritionnel déjà non négligeable du produit selon l'invention.

Selon l'invention, le nouveau produit alimentaire est aromatisé grâce à l'ajout d'au moins arôme (c'est-à-dire d'un ou plusieurs arômes), l'arôme étant choisi parmi les arômes de fruits secs.

Dans la présente invention, l'appellation « arôme » désigne toutes substances non destinées à être consommées en l'état, qui sont ajoutés aux denrées alimentaires pour leur conférer une odeur et/ou un goût ou modifier ceux-ci. Elles sont issues ou constituées des catégories suivantes: substances aromatisantes, préparations aromatisantes, arômes obtenus par traitement thermique, arômes de fumée, précurseurs d'arôme ou autres arômes ou leurs mélanges.

Les substances aromatisantes sont des substances chimiques définies, ce qui inclut les substances aromatisantes obtenues par synthèse chimique ou isolées par des procédés chimiques, et les substances aromatisantes naturelles. Les préparations aromatisantes sont des arômes, autres que des substances chimiques définies, qui sont obtenues par des procédés physiques, enzymatiques ou microbiologiques appropriés, à partir de matières d'origine végétale, animale ou microbiologique prises en l'état ou après leur transformation pour la consommation humaine. Les précurseurs d'arôme tels que les hydrates de carbone, les oligopeptides et les acides aminés confèrent une flaveur aux denrées alimentaires par des réactions chimiques qui se produisent pendant la transformation de ces denrées.

Selon un mode préférentiel, l'arôme utilisé est choisi parmi l'arôme noisette, cacahuète, noix de cajou, noix de pécan, pistaches...

Selon un autre mode de réalisation préférentiel, l'arôme utilisé est choisi parmi les arômes rappelant les saveurs salées de l'apéritif. Ainsi, l'arôme utilisé est choisi parmi les arômes de type bacon, pizza, poulet grillé, jambon, saucisson, salami, saucisse, quiche lorraine et toute autre saveur rappelant celles des plats ou snacks servis lors de l'apéritif. Selon un mode de réalisation, ledit produit est caractérisé en ce qu'il contient entre 1% et 10% d'arômes, et de préférence entre 2% et 6%, pourcentages exprimés par rapport à la masse totale des ingrédients mis en œuvre dans la recette de préparation dudit produit.

Selon un mode de réalisation avantageux de l'invention, ledit produit est caractérisé en ce qu'il contient également une fibre végétale.

Dans la présente invention, le terme « fibre végétale » désigne les fibres alimentaires végétales solubles et/ou insolubles. Les fibres végétales ne comprennent pas les hydrolysats d'amidon.

Les fibres végétales ne désignent pas seulement les matières fibreuses au sens strict, mais également toute une série de composés différents qui sont contenus presque exclusivement dans les aliments d'origine végétale et qui présentent la propriété commune de ne pouvoir être décomposés par les enzymes digestives de l'homme. Presque toutes les fibres alimentaires sont des polymères glucidiques. Depuis quelques années, les nutritionnistes se sont intéressés à un nouveau type de fibres alimentaires : l'amidon résistant. Il s'agit d'un amidon ou d'une fraction d'amidon qui n'est pas digérée dans l'intestin grêle et qui est fermentée par les bactéries du colon.

A la différence des fibres végétales traditionnelles, ces amidons présentent l'avantage de ne pas modifier l'apparence du produit dans lequel ils sont incorporés et constituent en quelque sorte une source de fibres invisible à l'œil nu. Ces amidons sont préconisés dans de nombreuses applications.

Ainsi, dans la présente invention, la fibre végétale est choisie parmi les fibres solubles, les fibres insolubles ou leurs mélanges.

Selon une premier mode de réalisation avantageux de l'invention, la fibre végétale est une fibre végétale insoluble, choisie parmi les amidons résistants. On pourra utiliser indifféremment les amidons résistants naturels ou les amidons résistants obtenus par modification chimique, et/ou physique, et/ou enzymatique.

Selon la présente invention, on désigne par amidon résistant, un amidon ou une fraction d'amidon qui n'est pas digérée dans l'intestin grêle et qui est fermentée par les bactéries du colon. Quatre catégories d'amidon résistant ont été identifiées :
- les amidons encapsulés, présents dans la plupart des aliments végétaux non raffinés tels que les légumes secs, qui sont inaccessibles aux enzymes (RS1),
- l'amidon granulaire de certains aliments crus comme la banane ou la pomme de terre et les amidons riches en amylose (RS2),
- les amidons rétrogradés, que l'on trouve dans les aliments cuits puis réfrigérés ou congelés (RS3),
- les amidons modifiés par voie chimique comme en particulier les amidons éthérifiés ou estérifiés (RS4).

Les amidons résistants proposés notamment par la société NATIONAL STARCH tels que ceux commercialisés sous l'appellation HI-MAIZE®, sont issus de variétés de maïs riches en amylose et se comportent comme des fibres insolubles. Des amidons résistants de type RS3 sont également proposés sous l'appellation NOVELOSE®.

Ces amidons résistants diminuent la réponse glycémique, améliorent la santé du système digestif grâce à leurs propriétés prébiotiques et contribuent à la régularité du transit, sans être à haute valeur calorique.

Selon un mode de réalisation avantageux de la présente invention, ledit produit comprend un mélange d'une composition de protéines végétales, de préférence de protéines de légumineuses, et plus préférentiellement encore de protéines de pois et d'une fibre végétale soluble.

Selon ce mode de réalisation, le produit obtenu par compression comprend de 15% à 50% d'une composition de protéines végétales et de 15% à 50% d'une fibre végétale soluble.

Dans ce mode de réalisation avantageux de la présente invention, le produit alimentaire obtenu par compression comprend des fibres solubles, et la mention « riches en fibres » ou « source de fibres » peut être apposée sur l'emballage dudit produit. Ce qui représente un avantage nutritionnel et marketing supplémentaire. Ceci sera démontré dans les exemples ci-après.

De préférence, ladite fibre soluble végétale est choisie parmi les fructanes dont les Fructo-oligosaccharides (FOS) et l'inuline, les Gluco-oligosaccharides (GOS), les Isomalto-oligosaccharides (IMOs), les Trans-galacto-oligosaccharide (TOS), les pyrodextrines, le polydextrose, les maltodextrines branchées, les dextrines indigestibles et les oligosaccharides solubles issus de plantes oléagineuses ou protéagineuses ou leurs mélanges.

Par fibre soluble, on entend des fibres solubles dans l'eau. Les fibres peuvent être dosées selon différentes méthodes AOAC. On peut citer à titre d'exemple, les méthodes AOAC 997.08 et 999.03 pour les fructanes, les FOS et l'inuline, la méthode AOAC 2000.11 pour le polydextrose, la méthode AOAC 2001.03 pour le dosage des fibres contenues dans les maltodextrines branchées et les dextrines indigestibles ou la méthode AOAC 2001.02 pour les GOS ainsi que les oligosaccharides solubles issus de plantes oléagineuses ou protéagineuses. Parmi les oligosaccharides solubles issus de plantes oléagineuses ou protéagineuses, on peut citer les oligosaccharides de soja, de colza ou de pois.

Selon un mode de réalisation avantageux de la présente invention, le produit comprend un mélange d'une composition de protéines végétales, de préférence de protéines de légumineuses, et plus préférentiellement encore de protéines de pois et de fibres végétales solubles qui sont des maltodextrines branchées.

On entend par maltodextrines branchées (MDB), les maltodextrines spécifiques identiques à celles décrites dans le brevet EP 1.006.128-B1 dont la Demanderesse est titulaire. Ces MDB ont l'avantage de représenter une source de fibres indigestibles bénéfiques pour le métabolisme et pour l'équilibre intestinal.

Selon la présente invention, lesdites maltodextrines branchées sont caractérisées en ce qu'elles présentent:
- entre 15 et 50% de liaisons glucosidiques 1-6, préférentiellement entre 22% et 45%, plus préférentiellement entre 20% et 40%, et encore plus préférentiellement entre 25% et 35%,
- une teneur en sucres réducteurs inférieure à 20%, préférentiellement comprise entre 2% et 20%, plus préférentiellement entre 2,5% et 15%, et encore plus préférentiellement entre 3,5% et 10%,
- un indice de polymolécularité inférieur à 5, préférentiellement compris entre 1 et 4, plus préférentiellement entre 1,5 et 3, et
- une masse moléculaire moyenne en nombre Mn inférieure à 4500 g/mole, préférentiellement comprise entre 400 et 4500 g/mole, plus préférentiellement entre 500 et 3000 g/mole, encore préférentiellement entre 700 et 2800 g/mole, encore plus préférentiellement comprise entre 1000 et 2600 g/mole.

En particulier, on pourra utiliser des MDB présentant entre 15 et 35% de liaisons glucosidiques 1-6, une teneur en sucres réducteurs inférieure à 20%, une masse moléculaire moyenne en poids MW comprise entre 4000 et 6000 g/mole et une masse moléculaire moyenne en nombre Mn comprise entre 250 et 4500 g/mole.

Certaines sous-familles de MDB décrites dans la susdite demande peuvent aussi être utilisées conformément à l'invention. Il s'agit par exemple de MDB de hauts poids moléculaires présentant une teneur en sucres réducteurs au plus égale à 5 et un Mn compris entre 2000 et 4500 g/mole. Les MDB de bas poids moléculaires présentant une teneur en sucres réducteurs comprise entre 5 et 20% et une masse moléculaire Mn inférieure à 2000 g/mole peuvent également être employées.

Dans un autre mode de réalisation avantageux de la présente invention, on pourra également utiliser, conformément à l'invention, les maltodextrines hyperbranchées hypoglycémiantes décrites dans la demande FR 1251810 dont la Demanderesse est titulaire.

Dans la présente demande, les pyrodextrines désignent les produits obtenus par chauffage de l'amidon amené à faible taux d'humidité, en présence de catalyseurs acides ou basiques, et présentant généralement un poids moléculaire compris entre 1000 et 6000 daltons. Ce grillage à sec de l'amidon, le plus couramment en présence d'acide, entraîne à la fois une dépolymérisation de l'amidon et un réarrangement des fragments d'amidon obtenus, conduisant à l'obtention de molécules très ramifiées. Cette définition vise en particulier les dextrines dites indigestibles, d'un poids moléculaire moyen de l'ordre de 2000 daltons.

Le polydextrose est une fibre soluble produite par polymérisation thermique du dextrose, en présence de sorbitol et d'acide comme catalyseur. Un exemple d'un tel produit est par exemple le LITESSE® commercialisé par DANISCO.

Selon un mode particulièrement avantageux de la présente invention, le produit obtenu par compression selon l'invention comprend du NUTRIOSE®, qui est une gamme complète de fibres solubles, reconnues pour leurs bienfaits, et fabriquées et commercialisées par la Demanderesse. Les produits de la gamme NUTRIOSE® sont des dérivés d'amidon de blé ou de maïs partiellement hydrolysés, qui contiennent jusqu'à 85 % de fibre. Cette richesse en fibre permet d'augmenter la tolérance digestive, d'améliorer la gestion de calorie, de prolonger le dégagement d'énergie et d'obtenir un taux de sucre inférieur. De plus, la gamme NUTRIOSE® est l'une des fibres les mieux tolérées disponibles sur le marché. Elle montre une tolérance digestive plus élevée, permettant une meilleure incorporation que d'autres fibres, ce qui représente de vrais avantages alimentaires.

Selon un autre mode de réalisation avantageux de l'invention, ledit produit est caractérisé en ce qu'il contient également une farine de microalgues.

Les algues font partie des premiers organismes apparus sur Terre, et sont définies comme des organismes eucaryotes dépourvus de racines, de tige et de feuille, mais possédant de la chlorophylle ainsi que d'autres pigments accessoires à la photosynthèse productrice d'oxygène. Elles sont bleues, rouges, jaunes, doré et brun ou encore vertes. Elles représentent plus de 90% des végétaux marins et 18% du règne végétal, avec leurs 40 000 à 45 000 espèces. Les algues sont des organismes extrêmement variés tant par leur taille et leur forme que par leur structure cellulaire. Elles vivent en milieu aquatique ou très humide. Elles contiennent de nombreuses vitamines et oligo-éléments, et sont de véritables concentrés d'actifs stimulants et bienfaisants pour la santé et la beauté. Elles ont des vertus anti-inflammatoires, hydratantes, adoucissantes, régénérantes, raffermissantes, anti-âge. Elles possèdent également des caractéristiques "technologiques" qui permettent d'apporter de la texture à un produit alimentaire. En effet, les fameux additifs E400 à E407 ne sont en fait que des composés extraits d'algues, dont on utilise les propriétés épaississantes, gélifiantes, émulsifiantes et stabilisantes.

Parmi les algues, on peut distinguer les macroalgues et les microalgues, notamment algues microscopiques unicellulaires, photosynthétiques ou non, d'origine marine ou non, cultivées notamment pour leurs applications en Bio-carburant ou dans le domaine alimentaire. Par exemple, la spiruline (Arthrospira platensis) est cultivée dans des lagunes ouvertes (en phototrophie) pour une utilisation comme complément alimentaire ou incorporée en petites quantités dans des confiseries ou des boissons (généralement moins de 0,5 % p/p). D'autres microalgues riches en lipides, y compris certaines espèces de Chlorella, sont également très populaires dans les pays asiatiques comme compléments alimentaires (citons les microalgues du genre Crypthecodinium ou Schizochytrium). La production et l'utilisation de farines de microalgues est décrite dans les demandes WO 2010/120923 et WO 2010/045368.

Au sens de la présente invention, le terme « farine de microalgues » doit être compris dans son interprétation la plus large et comme désignant par exemple, une composition comprenant une pluralité de particules de biomasse de microalgues. La biomasse de microalgues est dérivée de cellules de microalgues, qui peuvent être entières ou cassées, ou un mélange de cellules entières et cassées. Il est entendu dans le présent document que la farine de microalgues désigne un produit essentiellement composé de biomasse de microalgues, c'est-à-dire à au moins 90, 95, 99%. Dans un mode de réalisation préféré, la farine de microalgues comprend uniquement de la biomasse de microalgues.

La présente invention est ainsi relative à la biomasse de microalgues propre à la consommation humaine qui est riche en nutriments, notamment en lipides et / ou protéines.

La fraction protéique de la farine de microalgues qui renferme beaucoup d'acides aminés essentiels au bien-être humain et animal fournit donc également des avantages nutritionnels et santé intéressants et non négligeables.

Au sens de l'invention, les microalgues considérées sont les espèces qui produisent des huiles appropriées et / ou des lipides et / ou des protéines.

Selon un autre mode de réalisation de l'invention, la biomasse de microalgues contient au moins 30% en poids sec de protéines, au moins 40%, ou au moins 45% en poids sec de protéines.

Selon un mode de réalisation avantageux de la présente invention, ledit produit comprend un mélange d'une composition de protéines végétales, de préférence de protéines de légumineuses, et plus préférentiellement encore de protéines de pois et d'une farine de microalgues. Selon ce mode de réalisation, le produit obtenu par compression comprend de 15% à 50% d'une composition de protéines végétales et de 15% à 50% d'une farine d'algues.

Selon un autre mode préférentiel de l'invention, les microalgues appartiennent au genre *Chlorella.*

La chlorelle (ou Chlorella) est une algue unicellulaire verte microscopique ou microalgue d'eau douce apparue sur la terre depuis plus de 3 milliards d'années, appartenant à l'embranchement des Chlorophytes. La chlorelle possède la plus grande concentration en chlorophylle de tous les végétaux, et sa capacité à la photosynthèse est considérable. Depuis sa découverte, la chlorelle n'a cessé de générer un intérêt considérable dans le monde, et aujourd'hui elle est produite à grande échelle pour des utilisations dans des compléments alimentaires et nutritionnels. En effet, la chlorelle contient plus de 60% de protéines qui renferment beaucoup d'acides aminés essentiels au bien-être humain et animal. La chlorelle contient également beaucoup de vitamines (A, Bêta carotène, B1 : thiamine, B2 : riboflavine, B3 : niacine, B5 : acide pantothénique, B6 : pyridoxine, B9 : acide folique, B12 : cobalamine, vitamine C : acide ascorbique, vitamine E : tocophérol, vitamine K : phylloquinone), de lutéine (famille des caroténoïdes, puissant antioxydant), et de minéraux dont le calcium, le fer, le phosphore, le manganèse, le potassium, le cuivre et le zinc. En outre, la chlorelle contient certains acides gras polyinsaturés de type oméga indispensables au bon fonctionnement cardiaque et cérébral et à la prévention de nombreuses maladies comme le cancer, le diabète ou l'obésité.

La farine de microalgues fournit également d'autres bénéfices, comme des micronutriments, des fibres alimentaires (glucides solubles et insolubles), des phospholipides, des glycoprotéines, des phytostérols, tocophérols, tocotriénols, et du sélénium.

Les bienfaits rapportés à la consommation de chlorelle sont très nombreux. C'est un complément alimentaire utilisé quotidiennement au Japon par 4 millions de personnes. A tel point que le gouvernement japonais l'a classée comme « aliment d'intérêt national ».

Facultativement, les microalgues utilisées peuvent être choisies, et de manière non-exhaustive, parmi les *Chlorella protothecoides, Chlorella kessleri, Chlorella minutissima, Chlorella sp., Chlorella sorokiniama, Chlorella luteoviridis, Chlorella vulgaris, Chlorella reisiglii, Chlorella ellipsoidea, Chlorella saccarophila, Parachlorella kessleri, Parachlorella beijerinkii, Prototheca stagnora et Prototheca moriformis.* De manière préférée, les microalgues utilisées selon l'invention appartiennent à l'espèce *Chlorella protothecoides.*

Dans le cadre de l'invention, *Chlorella protothecoides* est également choisie en raison de sa composition élevée en protéines.

Selon un autre mode de réalisation avantageux de l'invention, ledit produit est caractérisé en ce qu'il contient également un polyol. Ce mode de réalisation sera particulièrement adapté pour les produits devant posséder une saveur plutôt sucrée.

Le terme « polyols » désigne dans la présente invention, les produits obtenus par hydrogénation catalytique de sucres réducteurs, monosaccharides ou disaccharides. Notamment le polyol peut être choisi dans le groupe comprenant le sorbitol, le xylitol, l'érythritol, le maltitol, l'isomalt, l'isomaltitol, le lactitol, l'alpha-D-glucopyranosyl-1-6-sorbitol (=1,6-GPS), l'alpha-D-glucopyranosyl 1-1-mannitol (=1,1-GPM), l'alpha-D-glucopyranosyl-1-1-sorbitol (=1,1-GPS) et leurs mélanges quelconques, et de préférence parmi le maltitol, le xylitol, le sorbitol type 20/60, l'isomalt de type M ou l'érythritol.

Les polyols sont les incontournables amis des dents : ils sont non fermentescibles par la flore buccale, non acidogènes, et non cariogènes, ils ne créent aucune des conditions favorables à l'apparition de la carie. Au contraire, en limitant l'action des bactéries néfastes pour les dents et la croissance de la plaque dentaire, les polyols évitent la déminéralisation de l'émail dentaire. Autant de propriétés qui leur permettent d'arborer fièrement le logo de l'association dentaire *Toothfriendly International* (en français, *toothfriendly* signifie *ami des dents*). Les produits à base de polyols peuvent donc répondre également aux critères requis pour afficher ce logo s'ils sont exempts de potentiel cariogène ou érosif apportés parfois par d'autres ingrédients. Encore un avantage non négligeable pour les snacks de la présente invention.

Selon un mode de réalisation avantageux de la présente invention, ledit produit comprend un mélange d'une composition de protéines végétales, de préférence de protéines de légumineuses, et plus préférentiellement encore de protéines de pois et d'au moins un polyol.

Selon ce mode de réalisation, le produit obtenu par compression comprend au moins 75% d'une composition de protéines végétales et de 1 à 15% d'au moins un polyol. De façon préférée, le polyol est le sorbitol.

Le produit alimentaire objet de l'invention obtenu par compression d'une composition pulvérulente de protéines essentiellement végétales, de préférence exclusivement de protéines végétales .est sous forme solide, plus particulièrement sous la forme de tablettes, comprimés plats ou bombés, bâtonnets, ou comprimés oblongs.

Dans un mode de réalisation secondaire de l'invention, les produits obtenus par compression selon l'invention peuvent être consommés tels quels comme des snacks mais également être utilisés en l'état ou sous la forme broyée dans la préparation d'autres produits, tels que du chocolat, des barres céréalières, des céréales, du muesli etc.... Cette utilisation permet d'ajouter des inclusions ou des clusters dans d'autres produits alimentaires en écartant toujours le risque allergène des inclusions de type cacahuète habituellement utilisées.

Le procédé de compression utilisé pour obtenir le produit objet de l'invention est un procédé bien connu de l'homme du métier.

La mise en forme de poudres par compression est en effet un procédé largement utilisé dans de nombreux secteurs industriels comme la métallurgie des poudres (poudres métalliques et céramiques), l'agroalimentaire, le cosmétique, la pharmacie et récemment dans la réduction des poussières et des emballages. Cependant, compte tenu des propriétés des poudres (ou mélange de poudres) qui sont très sensibles à la manutention, à la provenance ou à la manipulation, la réussite du procédé de compaction et la formation d'un comprimé conforme demande une compréhension des propriétés fondamentales des poudres. Ces propriétés, qui peuvent être d'ordre physico-chimique et/ou mécanique, permettent d'expliquer comment une formulation pourrait se comporter en compaction.

Les principales étapes du procédé de mise en forme par compression, de préférence par compression directe, et plus préférentiellement par compression simple en matrice, peuvent être décrites comme la succession de quatre phases primordiales: remplissage de la matrice, compression ou charge, décharge ou retrait du poinçon puis éjection.

La présente invention concerne également un procédé de préparation desdits produits caractérisé en ce qu'il comprend les étapes suivantes :
- De préparation d'une composition pulvérulente comprenant une protéine végétale ou un mélange de protéines végétales, en mélange avec au moins un arôme, l'arôme étant choisi parmi les arômes de fruits secs et de préférence avec au moins un lubrifiant,
- De remplissage de la matrice d'une presse avec le dit mélange ;
- De l'action de compression directe du mélange à l'aide d'un poinçon (charge)
- Du retrait du poinçon qui réalise la compression (décharge),
- l'éjection du comprimé
- Et optionnellement la soumission du dit comprimé à un procédé de dragéification dure ou pelliculage.

Le remplissage de la matrice se fait généralement d'une manière automatique dans les comprimeuses. La poudre ou composition pulvérulente de protéines végétales en mélange avec au moins un arôme s'écoule dans la matrice et un sabot vient araser la poudre. L'écoulement de la poudre est assuré par l'effet conjugué de la gravité et de la vibration du sabot. Il faut toutefois éviter les poudres cohésives qui s'écoulent mal (une opération de granulation est souvent utilisée dans ce cas) et veiller à ce qu'en cas de mélange de poudres, il n'y ait pas de ségrégation.

La compression est l'étape qui permet de densifier la poudre ou mélange et de la mettre en forme de comprimé. Le poinçon supérieur vient s'enfoncer dans la matrice. Cet enfoncement est contrôlé par une charge ou un déplacement imposé. En début de compaction, les particules se réarrangent par des glissements et des rotations pour former un empilement plus dense. Le lit de poudre est alors débarrassé de l'excès d'air et le nombre de points de contact entre particules augmente. À la fin de cette étape du tassement, les particules ne peuvent plus glisser les unes par rapport aux autres et l'on assiste à une réelle résistance de la poudre à l'enfoncement du poinçon.

La composition pulvérulente de protéines végétales ou mélange des protéines végétales utile à l'obtention du produit objet de l'invention peut être mélangée, avant d'être comprimée, à au moins un arôme et de préférence à au moins un lubrifiant.

D'autres ingrédients peuvent également être ajoutés à la composition pulvérulente de protéines végétales. A titre d'exemple, on peut citer les agents d'écoulement tels que la silice, du sel etc.

Les nouveaux produits selon l'invention ont, après compression, une texture très proche de celle des fruits secs, et plus particulièrement de la cacahuète.

En effet, lorsque les nouveaux produits sont consommés, ils sont croquants et se délitent sous la forme de petits morceaux rappelant ceux obtenus lors de la consommation des dits fruits secs.

Ceci s'explique par les propriétés fonctionnelles bien particulières de la composition de protéines végétales, de préférence de légumineuses et plus préférentiellement de pois utilisée, propriétés qui permettent d'obtenir cet effet sensoriel lors de la consommation desdits produits.

Le terme « propriétés fonctionnelles » des ingrédients alimentaires signifie dans la présente demande toute propriété non nutritionnelle qui influence l'utilité d'un ingrédient dans un aliment. Ces diverses propriétés contribuent à l'obtention des caractéristiques finales désirées de l'aliment. Quelques-unes de ces propriétés fonctionnelles sont la solubilité, l'hydratation, la viscosité, la coagulation, la stabilisation, la texturation, la formation de pâte, les propriétés moussantes, les capacités émulsifiantes et gélifiantes. Les protéines jouent également un rôle important dans les propriétés sensorielles des matrices alimentaires dans lesquelles elles sont utilisées, et il existe une réelle synergie entre les propriétés fonctionnelles et les propriétés sensorielles.

Les propriétés fonctionnelles des protéines ou fonctionnalité sont donc les propriétés physiques ou physico-chimiques qui ont une incidence sur les qualités sensorielles des systèmes alimentaires générées au cours des transformations technologiques, de la conservation ou des préparations culinaires domestiques.

On constate quelle que soit l'origine de la protéine cette dernière intervient sur la couleur, la flaveur et/ou la texture d'un produit. Ces caractéristiques organoleptiques interviennent de façon déterminante dans le choix du consommateur et elles sont dans ce cas largement prises en compte par les industriels.

La fonctionnalité des protéines est le résultat d'interactions moléculaires de ces dernières avec leur environnement (autres molécules, pH, température...). Ces propriétés sont généralement classées en 3 groupes :
- propriétés d'hydratation qui regroupent les interactions de la protéine avec l'eau : cela recouvre les propriétés d'absorption, de rétention, de mouillabilité, de gonflement, d'adhérence, de dispersion, de viscosité....
- propriétés de structuration qui regroupent les propriétés d'interaction Protéine-Protéine : cela recouvre les phénomènes de précipitation, de coagulation, de gélification....
- propriétés de surface qui regroupent les propriétés d'interaction des protéines avec d'autres structures polaires ou apolaires en phase liquide ou gazeuse : cela recouvre les propriétés émulsifiantes, moussantes....

Ces différentes propriétés ne sont pas indépendantes les unes des autres car une propriété fonctionnelle peut résulter de plusieurs types d'interactions ou de plusieurs propriétés fonctionnelles.

Ainsi, grâce aux propriétés fonctionnelles bien particulières de composition de protéines végétales, de préférence de légumineuses et plus préférentiellement de pois mise en œuvre dans la présente invention, il est possible de retrouver la structure d'un fruit sec lors de la consommation des produits fabriqués à partir de ces compositions de protéines végétales, en particulier de légumineuses ou plus préférentiellement de pois.

Comme précisé précédemment, dans un autre mode de réalisation particulier de l'invention, lesdits produits peuvent également avoir subi une étape de pelliculage, par exemple avec de l'amidon de pois modifié commercialisé par la demanderesse sous la marque LYCOAT® et des pigments comme ceux commercialisés par la société MERCK sous la marque CANDURIN®.

Dans un autre mode de réalisation de l'invention lesdits produits peuvent également avoir subi une étape de dragéification dure. La dragéification dure vise à obtenir une couche dragéifiée dure, de préférence croustillante et plus ou moins sucrée. La dragéification dure nécessite toujours l'utilisation d'un sirop de dragéification contenant entre autre des matières cristallisables. Le revêtement dur et cristallin s'obtient par application de ce sirop et évaporation de l'eau apportée par celui-ci. Le terme « dragéification dure » employé dans la présente invention comprendra également les techniques très voisines que sont le lissage et le givrage.

Le lissage consiste en une ou deux applications ou charges d'un sirop cristallisable dilué par rapport à celui utilisé en dragéification dure. Le but est souvent de parfaire l'aspect de surface de produits dragéifiés. Une dragéification dure est souvent suivie d'un lissage.

Le givrage vise également à améliorer l'aspect des produits, mais aussi à isoler ces derniers de l'humidité de l'atmosphère. Cette technique ressemble à une dragéification dure, en ce sens qu'un sirop cristallin est utilisé. La différence essentielle réside dans le fait que le nombre de cycles de dragéification réalisé n'est que d'un, deux ou trois seulement.

Les procédés de dragéifications dures sont parfaitement connus de l'homme du métier et sont par exemple décrits dans les demandes EP 1481597 et EP 2108264 dont la Demanderesse est titulaire.

L'invention sera encore mieux comprise à la lecture des exemples qui suivent, lesquels se veulent illustratifs en faisant seulement état de certains modes de réalisation et de certaines propriétés avantageuses selon l'invention, et non limitatifs.

### EXEMPLE 1. Recette de nouveaux snacks selon l'invention

### Recette mise en œuvre

| | **% (en poids)** |
|---|---|
| Composition de protéines de pois selon l'invention NUTRALYS^{®} F85M | 79,09 |
| Composition de protéines de blé NUTRALYS^{®} W | 4,11 |
| Dextrose GD, granulé | 10 |
| Arôme cacahuète MANE E - RQT8800/67SA | 5 |
| Stéarate de magnésium | 1 |
| Silice | 0,2 |
| Sel (NaCl) | 0,6 |
| TOTAL | 100 |

La composition de protéines de pois NUTRALYS^{®} F85M commercialisée par ROQUETTE frères, contient 85% (pourcentage exprimé par rapport à la matière sèche) de protéines de pois.

La composition de protéines de blé utilisée est commercialisée par ROQUETTE frères sous la dénomination commerciale NUTRALYS^{®} W.

Le dextrose utilisé est commercialisé par ROQUETTE sous l'appellation Dextrose monohydrate GD.

L'arôme de cacahuète est commercialisé par la société V. MANE FILS située à Le Bar sur Loup (06620).

### Procédé de réalisation

- Mélanger tous les ingrédients entre eux pendant 5 minutes, excepté le stéarate de magnésium.
- Ajouter le stéarate de magnésium et remélanger le tout pendant 5 minutes.
- Utiliser une presse à compression alternative avec des poinçons de forme oblongs pour obtenir les produits selon l'invention.

### EXEMPLE 2. Recette de nouveaux snacks selon l'invention

### Recette mise en œuvre

| | **% (en poids)** |
|---|---|
| Composition de protéines de pois selon l'invention NUTRALYS® F85M | 84,09 |
| Composition de protéines de blé NUTRALYS® W | 4,11 |
| Dextrose GD, granulé | 5 |
| Arôme cacahuète MANE E - RQT8800/67SA | 5 |
| Stéarate de magnésium | 1 |
| Silice | 0,2 |
| Sel (NaCl) | 0,6 |
| TOTAL | 100 |

La composition de protéines de pois NUTRALYS^{®} F85M commercialisée par ROQUETTE frères, contient 85% (pourcentage exprimé par rapport à la matière sèche) de protéines de pois.

La composition de protéines de blé utilisée est commercialisée par ROQUETTE frères sous la dénomination commerciale NUTRALYS^{®} W.

Le dextrose utilisé est commercialisé par ROQUETTE sous l'appellation Dextrose monohydrate GD.

L'arôme de cacahuète est commercialisé par la société V. MANE FILS située à Le Bar sur Loup (06620).

### Procédé de réalisation

- Mélanger tous les ingrédients entre eux pendant 5 minutes, excepté le stéarate de magnésium.
- Ajouter le stéarate de magnésium et remélanger le tout pendant 5 minutes.
- Utiliser une presse à compression alternative avec des poinçons de forme oblongs pour obtenir les produits selon l'invention.

### EXEMPLE 3 : Dégustation des produits obtenus selon les exemples 1 et 2

Les produits obtenus selon les exemples 1 et 2 ci-dessus ont été dégustés par un jury composé de 20 personnes. La note finale globale a été très bonne, tant au niveau du goût que de la texture. Leur texture a été jugée comme étant proche de celle d'une cacahuète, c'est-à-dire croquante sous la dent et se désintégrant lors de la mastication en petits morceaux.

Ainsi l'intérêt de l'invention est parfaitement démontré. Il est tout à fait possible de reproduire le goût et la texture de la cacahuète en s'affranchissant du côté allergène très gênant et en diminuant l'aspect calorique.

### EXEMPLE 4 : Analyse de l'aminogramme des produits obtenus selon l'exemple 2

La composition en acide aminés des snacks obtenus selon l'exemple 2 a été réalisée selon les méthodes de mesure bien connues de l'homme du métier. Les acides aminés sont libérés des protéines par une hydrolyse acide (HCl 6 mol/l - 24 h); puis ils peuvent être dosés par différentes méthodes chromatographiques (CCM, HPLC, « autoanalyseur » avec colonne d'échange d'ion).

Dans le tableau ci-dessous sont présentés les acides aminés dits essentiels, c'est-à-dire indispensable et qui ne peuvent être synthétisés de *novo* par l'organisme (généralement humain) ou qui sont synthétisés à une vitesse insuffisante, et doivent donc être apportés par l'alimentation, condition nécessaire au bon fonctionnement de l'organisme.

Chez l'Homme, on compte huit acides aminés essentiels : le tryptophane, la lysine, la méthionine, la phénylalanine, la thréonine, la valine, la leucine et l'isoleucine. Deux autres, l'histidine et l'arginine, sont dits semi-essentiels car seuls les nourrissons ont besoin d'un apport exogène (on les trouve dans le lait maternel).

| en g/100g protein (N*6,25) | | | | |
|---|---|---|---|---|
| | **FAO adult 2008** | Nutralys F85M | Nutralys W | Protein snack ratio 95/5 |
| Cystéine + Methionine | **2,2** | 2,1 | 3,5 | 2,17 |
| Histidine | **1,5** | 2,5 | 2 | 2,48 |
| Isoleucine | **3** | 4,7 | 3,4 | 4,64 |
| Leucine | **5,9** | 8,2 | 6,7 | 8,13 |
| Lysine | **4,5** | 7,1 | 1,4 | 6,82 |
| Phenylalanine + Tyrosine | **3,8** | 9,3 | 8,7 | 9,27 |
| Threonine | **2,3** | 3,8 | 2,6 | 3,74 |
| Tryptophan | **0,6** | 1 | 1 | 1,00 |
| Valine | **3,9** | 5 | 3,8 | 4,94 |
| **AAS** | | **95** | **31** | **99** |

Quantité en g dans la formule des snacks :

| | |
|---|---|
| Nutralys F85M | 84,09 |
| Nutralys W | 4,11 |
| *g*/*100g produit* | |

Tableur avec formule de calcul prenant en compte la part de protéine de ces ingrédients

| | g | g |
|---|---|---|
| Nutralys F85M | 67,27 | 95,1 |
| Nutralys W | 3,49 | 4,9 |
| *TOTAL* | *70,77 g*/*100g produit* | *100 g*/*100g proteine* |

Le profil en acides aminés des snacks est comparé avec les recommandations de la Food and Agriculture Organisation of the United Nations (FAO).

On voit que le ratio protéines de pois/protéines de blé permet d'avoir un aminogramme sur les acides aminés essentiels très proche de celui recommandé par la FAO.

Donc l'intérêt de l'invention du point de vu nutritionnel est également confirmé.

Consommer les snacks selon l'invention permet d'apporter à son organisme les bonnes quantités d'acides aminés dits essentiels.

### EXEMPLE 5. Autres recettes de nouveaux snacks selon l'invention

Les exemples A et B concernent des snacks selon l'invention contenant un mélange de protéines de pois et de protéines de blé.

L'exemple C concerne des snacks selon l'invention contenant des protéines de pois et des fibres solubles.

L'exemple D concerne des snacks selon l'invention contenant des protéines de pois comme unique source de protéines.

L'exemple E concerne des snacks selon l'invention contenant des protéines de pois et des protéines d'algues.

L'exemple F concerne des snacks selon l'invention contenant des protéines de pois et du sorbitol.

Tous les produits obtenus selon les essais A à F ci-dessus ont été dégustés par un jury composé de 20 personnes. La note finale globale a été très bonne, tant au niveau du goût que de la texture. Leur texture a été jugée comme étant proche de celle d'une cacahuète pour les essais A et B, c'est-à-dire croquante sous la dent et se désintégrant lors de la mastication en petits morceaux.

Pour les essais C à F, la texture et le goût des différents snacks ont également été jugés comme étant très agréables et satisfaisants.

| % en poids | A | B | C | D | E | F |
|---|---|---|---|---|---|---|
| Composition de protéines de pois selon l'invention NUTRALYS® F85M | 84 | 79,09 | 46,7 | 24,8 | 20,7 | 89,7 |
| Composition de protéines de blé NUTRALYS® W | 4,2 | 4,11 | - | - | - | - |
| Fibres solubles NUTRIOSE® | - | - | 50 | - | - | - |
| Dextrose GD, granulé | 5 | 10 | - | 72 | 44 | - |
| Farine d'algues riche en protéines | - | - | - | - | 30 | - |
| Sorbitol poudre NEOSORB® P300 DC | - | - | - | - | - | 5 |
| Arôme cacahuète MANE E - RQT8800/67SA | 5 | 5 | - | - | - | - |
| Arôme Bacon | - | - | - | - | 3 | 3 |
| Arôme caramel | - | - | 2 | 2 | - | - |
| Stéarate de magnésium | 1 | 1 | 1 | 1 | 1 | 1 |
| Silice | 0,2 | 0,2 | 0,2 | 0,1 | 0,5 | 0,5 |
| Sel (NaCl) | 0,6 | 0,6 | 0,1 | 0,1 | 0,8 | 0,8 |
| TOTAL | 100 | 100 | 100 | 100 | 100 | 100 |

## Revendications

1. Produit alimentaire obtenu par compression d'une composition pulvérulente comprenant une protéine ou mélange de protéines essentiellement, de préférence exclusivement végétales, le produit alimentaire étant aromatisé grâce à l'ajout d'au moins un arôme, l'arôme étant choisi parmi les arômes de fruits secs.

2. Produit alimentaire selon la revendication 1, l'arôme étant choisi parmi l'arôme noisette, cacahuète, noix de cajou, noix de pécan, pistaches.

3. Produit alimentaire selon l'une ou l'autre des revendications 1 ou 2, **caractérisé en ce que** la ou les protéines végétales appartiennent aux protéines issues des céréales, des oléagineux, des légumineuses et des tubercules, ainsi que toutes les protéines issues des algues et des microalgues.

4. Produit alimentaire selon l'une quelconque des revendications précédentes, **caractérisé en ce que** la protéine végétale appartient aux protéines de légumineuses, la protéine de légumineuse étant de préférence choisie dans le groupe consistant en la protéine de la luzerne, du trèfle, du lupin, du pois, du haricot, de la fève, de la fèverole, de la lentille, et de leurs mélanges.

5. Produit alimentaire selon la revendication 4, **caractérisé en ce que** la protéine végétale est une protéine de pois.

6. Produit alimentaire selon l'une quelconque des revendications précédentes, **caractérisé en ce qu'**il contient au moins 15%, de préférence au moins 20% d'une composition de protéines végétales, ces pourcentages étant exprimés par rapport à la masse totale des ingrédients mis en œuvre dans la recette de préparation dudit produit.

7. Produit alimentaire selon l'une quelconque des revendications précédentes, **caractérisé en ce qu'**il contient au moins 50% d'une composition de protéines végétales, pourcentage exprimé par rapport à la masse totale des ingrédients mis en œuvre dans la recette de préparation dudit produit.

8. Produit alimentaire selon l'une quelconque des revendications 1 à 5, **caractérisé en ce qu'**il contient au moins 60% de protéines végétales, pourcentage exprimé par rapport à la masse totale des ingrédients mis en œuvre dans la recette de préparation dudit produit.

9. Produit alimentaire selon l'une quelconque des revendications 1 à 5, **caractérisé en ce qu'**il contient au moins 70% de protéines végétales, pourcentage exprimé par rapport à la masse totale des ingrédients mis en œuvre dans la recette de préparation dudit produit.

10. Produit alimentaire selon l'une quelconque des revendications 1 à 5, **caractérisé en ce qu'**il contient au moins 75% de protéines végétales, pourcentage exprimé par rapport à la masse totale des ingrédients mis en œuvre dans la recette de préparation dudit produit.

11. Produit alimentaire selon l'une quelconque des revendications précédentes, **caractérisé en ce qu'**il contient de 15% à 50% d'une fibre végétale soluble, pourcentage exprimé par rapport à la masse totale des ingrédients mis en œuvre dans la recette de préparation dudit produit.

12. Produit alimentaire selon la revendication précédente **caractérisé en ce que** la fibre végétale soluble est choisie parmi les fructanes dont les Fructo-oligosaccharides (FOS) et l'inuline, les Gluco-oligosaccharides (GOS), les Isomalto-oligosaccharides (IMOs), les Trans-galacto-oligosaccharide (TOS), les pyrodextrines, le polydextrose, les maltodextrines branchées, les dextrines indigestibles et les oligosaccharides solubles issus de plantes oléagineuses ou protéagineuses ou leurs mélanges.

13. Produit alimentaire selon l'une quelconque des revendications 11 et 12, **caractérisé en ce que** la fibre végétale soluble est une maltodextrine branchée.

14. Produit alimentaire selon l'une quelconque des revendications 1 à 10, **caractérisé en ce qu'**il contient de 15% à 50% d'une farine de microalgue, pourcentage exprimé par rapport à la masse totale des ingrédients mis en œuvre dans la recette de préparation dudit produit.

15. Produit alimentaire selon la revendication précédente, **caractérisé en ce que** la farine de microalgues est une farine de microalgues du genre Chlorella, et plus particulièrement de l'espèce *Chlorella protothecoides.*

16. Produit alimentaire selon l'une quelconque des revendications 1 à 10, **caractérisé en ce qu'**il contient de 1% à 15% d'au moins un polyol, et de préférence du sorbitol.

17. Produit alimentaire selon l'une quelconque des revendications précédentes, **caractérisé en ce qu'**il contient entre 1% et 10% d'arômes, et de préférence entre 2% et 6%, pourcentages exprimés par rapport à la masse totale des ingrédients mis en œuvre dans la recette de préparation dudit produit.

18. Produit alimentaire selon l'une quelconque des revendications précédentes, **caractérisé en ce qu'**il a subi un traitement final choisi parmi la dragéification dure et le pelliculage.

19. Procédé de préparation du produit alimentaire selon l'une quelconque des revendications précédentes, **caractérisé en ce qu'**il comprend les étapes suivantes :
- de préparation d'une composition pulvérulente comprenant une protéine végétale ou un mélange de protéines végétales, en mélange avec au moins un arôme, l'arôme étant choisi parmi les arômes de fruits secs ;
- de remplissage de la matrice d'une presse avec le dit mélange ;
- de l'action de compression directe du mélange à l'aide d'un poinçon
- du retrait du poinçon qui réalise la compression,
- l'éjection du comprimé
- et optionnellement, la soumission du dit comprimé à un procédé de dragéification dure ou pelliculage.

20. Utilisation du produit selon l'une des revendications 1 à 18 ou obtenu selon la revendication 19 comme substitut de fruit sec allergène.

## Patentansprüche

1. Lebensmittelprodukt, das durch Komprimieren einer pulverförmigen Zusammensetzung erhalten wird, die ein im Wesentlichen, bevorzugt ausschließlich, pflanzliches Protein oder eine Mischung pflanzlicher Proteine umfasst, wobei das Lebensmittelprodukt durch die Zugabe von wenigstens einem Aroma aromatisiert ist, wobei das Aroma aus Trockenfruchtaromen gewählt ist.

2. Lebensmittelprodukt nach Anspruch 1, wobei das Aroma gewählt ist aus Haselnuss, Erdnuss, Cashewnuss, Pekannuss, Pistazien.

3. Lebensmittelprodukt nach einem der Ansprüche 1 oder 2, **dadurch gekennzeichnet, dass** das oder die pflanzliche(n) Protein(e) zu den aus Getreide, Ölpflanzen, Leguminosen und Knollen gewonnenen Proteinen sowie zu allen aus Algen und Mikroalgen gewonnenen Proteinen gehören.

4. Lebensmittelprodukt nach einem der vorhergehenden Ansprüche, **dadurch gekennzeichnet, dass** das pflanzliche Protein zu den Leguminosenproteinen gehört, wobei das Leguminosenprotein bevorzugt aus der Gruppe gewählt ist, umfassend das Protein von Luzerne, Klee, Lupine, Erbse, Bohne, Ackerbohne, Linse und Mischungen davon.

5. Lebensmittelprodukt nach Anspruch 4, **dadurch gekennzeichnet, dass** das pflanzliche Protein ein Erbsenprotein ist.

6. Lebensmittelprodukt nach einem der vorhergehenden Ansprüche, **dadurch gekennzeichnet, dass** es wenigstens 15 %, bevorzugt wenigstens 20 %, einer pflanzlichen Proteinzusammensetzung umfasst, wobei diese Prozentsätze in Bezug auf die Gesamtmasse der in der Rezeptur zur Herstellung des Produkts verwendeten Bestandteile ausgedrückt sind.

7. Lebensmittelprodukt nach einem der vorhergehenden Ansprüche, **dadurch gekennzeichnet, dass** es wenigstens 50 % einer pflanzlichen Proteinzusammensetzung umfasst, wobei der Prozentsatz in Bezug auf die Gesamtmasse der in der Rezeptur zur Herstellung des Produkts verwendeten Bestandteile ausgedrückt ist.

8. Lebensmittelprodukt nach einem der Ansprüche 1 bis 5, **dadurch gekennzeichnet, dass** es wenigstens 60 % pflanzliche Proteine umfasst, wobei der Prozentsatz in Bezug auf die Gesamtmasse der in der Rezeptur zur Herstellung des Produkts verwendeten Bestandteile ausgedrückt ist.

9. Lebensmittelprodukt nach einem der Ansprüche 1 bis 5, **dadurch gekennzeichnet, dass** es wenigstens 70 % pflanzliche Proteine umfasst, wobei der Prozentsatz in Bezug auf die Gesamtmasse der in der Rezeptur zur Herstellung des Produkts verwendeten Bestandteile ausgedrückt ist.

10. Lebensmittelprodukt nach einem der Ansprüche 1 bis 5, **dadurch gekennzeichnet, dass** es wenigstens 75 % pflanzliche Proteine umfasst, wobei der Prozentsatz in Bezug auf die Gesamtmasse der in der Rezeptur zur Herstellung des Produkts verwendeten Bestandteile ausgedrückt ist.

11. Lebensmittelprodukt nach einem der vorhergehenden Ansprüche, **dadurch gekennzeichnet, dass** es 15 % bis 50 % einer löslichen Pflanzenfaser umfasst, wobei der Prozentsatz in Bezug auf die Gesamtmasse der in der Rezeptur zur Herstellung des Produkts verwendeten Bestandteile ausgedrückt ist.

12. Lebensmittelprodukt nach dem vorhergehenden Anspruch, **dadurch gekennzeichnet, dass** die lösliche Pflanzenfaser gewählt ist aus Fruktanen einschließlich Fructo-Oligosacchariden (FOS) und Inulin, Gluco-Oligosacchariden (GOS), Isomalto-Oligosacchariden (IMOs), Trans-Galacto-Oligosacchariden (TOS), Pyrodextrinen, Polydextrose, verzweigten Maltodextrinen, unverdaulichen Dextrinen und löslichen Oligosacchariden aus ölhaltigen oder proteinhaltigen Pflanzen oder Mischungen davon.

13. Lebensmittelprodukt nach einem der Ansprüche 11 und 12, **dadurch gekennzeichnet, dass** die lösliche Pflanzenfaser ein verzweigtes Maltodextrin ist.

14. Lebensmittelprodukt nach einem der Ansprüche 1 bis 10, **dadurch gekennzeichnet, dass** es 15 % bis 50 % eines Mikroalgenmehls umfasst, wobei der Prozentsatz in Bezug auf die Gesamtmasse der in der Rezeptur zur Herstellung des Produkts verwendeten Bestandteile ausgedrückt ist.

15. Lebensmittelprodukt nach dem vorhergehenden Anspruch, **dadurch gekennzeichnet, dass** das Mikroalgenmehl ein Mikroalgenmehl der Gattung Chlorella und insbesondere der Art *Chlorella protothecoides* ist.

16. Lebensmittelprodukt nach einem der Ansprüche 1 bis 10, **dadurch gekennzeichnet, dass** es 1 % bis 15 % wenigstens eines Polyols, bevorzugt Sorbit, umfasst.

17. Lebensmittelprodukt nach einem der vorhergehenden Ansprüche, **dadurch gekennzeichnet, dass** es zwischen 1 % und 10 % Aromen und bevorzugt zwischen 2 % und 6 % umfasst, wobei die Prozentsätze in Bezug auf die Gesamtmasse der in der Rezeptur für die Herstellung des Produkts verwendeten Bestandteile ausgedrückt sind.

18. Lebensmittelprodukt nach einem der vorhergehenden Ansprüche, **dadurch gekennzeichnet, dass** es einer Endbehandlung unterzogen wurde, die aus Hartdragierung und Filmbeschichtung gewählt ist.

19. Verfahren zur Herstellung des Lebensmittelprodukts nach einem der vorhergehenden Ansprüche, **dadurch gekennzeichnet, dass** es die folgenden Schritte umfasst:
- Herstellung einer pulverförmigen Zusammensetzung, die ein pflanzliches Protein oder eine Mischung pflanzlicher Proteine in Mischung mit wenigstens einem Aroma umfasst, wobei das Aroma aus Trockenfruchtaromen gewählt ist;
- Füllen der Matrize einer Presse mit dieser Mischung;
- direkte Komprimierung der Mischung mit einem Stempel;
- Entfernen des Stempels, mit dem die Komprimierung durchgeführt wurde;
- Auswurf des Presslings
- und optional Anwendung eines Verfahrens des Hartdragierens oder der Filmbeschichtung auf den Pressling.

20. Verwendung des Produkts nach einem der Ansprüche 1 bis 18 oder welches nach Anspruch 19 als Ersatz für allergene Trockenfrüchte erhalten wurde.

## Claims

1. A food product obtained by compressing a pulverulent composition comprising an essentially, preferably exclusively, vegetable protein or protein mixture, said food product being flavored through the addition of at least one flavoring, said flavoring being chosen from the flavorings of dried fruits.

2. The food product as claimed in claim 1, **characterized in that** the flavoring is chosen from hazelnut flavoring, peanut flavoring, cashew nut flavoring, pecan nut flavoring, pistachio nut flavoring.

3. The food product as claimed in anyone of claims 1 or 2, **characterized in that** the vegetable protein(s) belong(s) to proteins derived from cereals, from oleaginous plants, from leguminous plants and from tubers, and also all the proteins derived from algae and from microalgae.

4. The food product as claimed in any one of the preceding claims, **characterized in that** the vegetable protein belongs to leguminous-plant proteins, the leguminous-plant protein preferably being chosen from the group consisting of alfalfa protein, clover protein, lupin protein, pea protein, bean protein, broad bean protein, horse bean protein, lentil protein, and mixtures thereof.

5. The food product as claimed in claim 4, **characterized in that** the vegetable protein is a pea protein.

6. The food product as claimed in any one of the preceding claims, **characterized in that** it contains at least 15%, preferably at least 20%, of a composition of vegetable proteins, these percentages being expressed relative to the total weight of the ingredients used in the recipe for preparing said product.

7. The food product as claimed in any one of the preceding claims, **characterized in that** it contains at least 50%, of a composition of vegetable proteins, this percentage being expressed relative to the total weight of the ingredients used in the recipe for preparing said product.

8. The food product as claimed in any one of claims 1 to 5, **characterized in that** it contains at least 60% of vegetable proteins, this percentage being expressed relative to the total weight of the ingredients used in the recipe for preparing said product.

9. The food product as claimed in any one of claims 1 to 5, **characterized in that** it contains at least 70% of vegetable proteins, this percentage being expressed relative to the total weight of the ingredients used in the recipe for preparing said product.

10. The food product as claimed in any one of claims 1 to 5, **characterized in that** it contains at least 75% of vegetable proteins, this percentage being expressed relative to the total weight of the ingredients used in the recipe for preparing said product.

11. The food product as claimed in any one of the preceding claims, **characterized in that** it contains from 15% to 50% of a soluble vegetable fiber, this percentage being expressed relative to the total weight of the ingredients used in the recipe for preparing said product.

12. The food product as claimed in the preceding claim, **characterized in that** the soluble vegetable fiber is chosen from fructans including fructooligosaccharides (FOSs) and inulin, glucooligosaccharides (GOSs), isomaltooligosaccharides (IMOs), trans-galactooligosaccharides (TOSs), pyrodextrins, polydextrose, branched maltodextrins, indigestible dextrins and soluble oligosaccharides derived from oleaginous or protein-producing plants or mixtures thereof.

13. The food product as claimed in either one of claims 11 and 12, **characterized in that** the soluble vegetable fiber is a branched maltodextrin.

14. The food product as claimed in any one of claims 1 to 10, **characterized in that** it contains from 15% to 50% of a microalga flour, this percentage being expressed relative to the total weight of the ingredients used in the recipe for preparing said product.

15. The food product as claimed in the preceding claim, **characterized in that** the microalgae flour is a flour of microalgae of the *Chlorella* genus, and more particularly of the *Chlorella protothecoides* species.

16. The food product as claimed in any one of claims 1 to 10, **characterized in that** it contains from 1% to 15% of at least one polyol, and preferably of sorbitol.

17. The food product as claimed in any one of the preceding claims, **characterized in that** it contains between 1% and 10% of flavorings, and preferably between 2% and 6%, these percentages being expressed relative to the total weight of the ingredients used in the recipe for preparing said product.

18. The food product as claimed in any one of the preceding claims, **characterized in that** it has undergone a final treatment chosen from hard sweet-coating and film-coating.

19. A process for preparing the food product as claimed in any one of the preceding claims, **characterized in that** it comprises the following steps:
- of preparing a pulverulent composition comprising a vegetable protein or a vegetable protein mixture, as a mixture with at least one flavoring, said flavoring being chosen from the flavorings of dried fruits;
- of filling the matrix of a press with said mixture;
- of the action of directly compressing the mixture using a punch;
- of withdrawing the punch which produces the compression;
- of ejecting the tablet;
- and optionally of subjecting said tablet to a hard sweet-coating or film-coating process.

20. The use of the product as claimed in one of claims 1 to 18 or obtained as claimed in claim 19, as a substitute for allergenic dried fruit.
